(19) Europäisches Patentamt
European Patent Office
Office européen des brevets

(11) EP 1 813 340 A2

(12) DEMANDE DE BREVET EUROPEEN

(43) Date de publication:
01.08.2007 Bulletin 2007/31

(51) Int Cl.:
B01D 45/08 (2006.01)   G01N 1/22 (2006.01)

(21) Numéro de dépôt: 07106374.7

(22) Date de dépôt: 21.05.2003

(84) Etats contractants désignés:
AT BE BG CH CY CZ DE DK EE ES FI FR GB GR HU IE IT LI LU MC NL PT RO SE SI SK TR

(30) Priorité: 24.05.2002 FR 0206324

(62) Numéro(s) de document de la (des) demande(s) initiale(s) en application de l'article 76 CBE:
03755175.1 / 1 511 549

(71) Demandeurs:
• L'AIR LIQUIDE, S.A.
pour l'étude et l'exploitation
des procédés Georges Claude
75007 Paris (FR)
• AIR LIQUIDE SANTE (INTERNATIONAL)
75007 Paris (FR)

(72) Inventeurs:
• Monnot, André
78700, Conflans Sainte Honorine (FR)
• Giroir, Paul
94420 Plessis Trevise (FR)
• Schreiber, Valérie
92190 Meudon (FR)

(74) Mandataire: Mellul-Bendelac, Sylvie Lisette et al
L'Air Liquide,
Service Propriété Industrielle,
75, Quai d'Orsay
75321 Paris Cedex 07 (FR)

Remarques:
Cette demande a été déposée le 18 - 04 - 2007 comme demande divisionnaire de la demande mentionnée sous le code INID 62.

(54) **Procédé de détermination de l'aptitude d'un dispositif capable de piéger des particules viables et reviviscentes, à déterminer la qualité micorbiologique d'un gaz ou d'un mélange de gaz sous pression et Nébuliseur associé**

(57) Procédé de détermination de l'aptitude d'un dispositif capable de piéger des particules viables et reviviscentes, à déterminer la qualité microbiologique d'un gaz ou d'un mélange de gaz sous pression, comprenant l'injection d'une quantité déterminée d'un ou plusieurs microorganismes connus dans le flux en amont du dispositif à qualifier et la quantification des microorganismes piégés par ce dernier dispositif, et nébuliseur apte à être mis en oeuvre dans le procédé selon l'invention; caractérisé en ce qu'il comporte

(i) une chambre cylindrique d'axe de symétrie (y), à laquelle sont connectés, une ligne d'alimentation en gaz nébuliseur et une ligne d'alimentation en solution contenant la quantité prédéterminée de microorganismes dans un gaz nébuliseur ;

(ii) une tête de pulvérisation connectée à ladite chambre, de forme tronconique d'axe de symétrie (y), comportant en sa petite base, un orifice de pulvérisation et

(iii) un tube capillaire cylindrique (y), de diamètre inférieur au diamètre dudit orifice de pulvérisation, dont l'une des extrémités est insérée dans ledit orifice de façon coaxiale à la tête de pulvérisation.

Figure 6

**Description**

L'invention appartient au domaine de la production, des applications et de l'analyse des gaz.

La qualité bactériologique des gaz, et de l'air en particulier, devient une nécessité. Il existe des appareils commerciaux, qui permettent de contrôler la qualité microbiologique de l'air ambiant. Ces appareils sont utilisés dans les hôpitaux, les laboratoires pharmaceutiques, dans l'industrie agroalimentaire et dans toute activité devant être effectuée dans des "salles blanches", comme la fabrication des composants électroniques. Ces appareils fonctionnent selon deux méthodes : la méthode de filtration (appareils MILLIPORE™ et appareils SARTORIUS™) et la méthode d'impaction.

La méthode de filtration consiste à faire traverser un gaz à travers un porte-filtre équipé d'un filtre de porosité comprise entre environ 0,22 $\mu$m et 0,45 $\mu$m. Les microorganismes véhiculés par le flux gazeux, et dont la taille est supérieure à celle des pores, sont retenus par le filtre. Le filtre est ensuite recueilli en conditions aseptiques, et il est soit lavé pour récupérer les microorganismes, soit mis directement en culture sur boîte de Pétri. Après une période déterminée d'incubation à l'étuve, on compte le nombre d'unités formant colonies (UFC), on identifie les germes présents et on en déduit ainsi un nombre d'unités formant colonie par volume de gaz prélevé exprimé en UFC / m$^3$. Selon une variante de cette méthode, on utilise un filtre hydrosoluble à base de gélatine, ce qui permet après addition d'eau de dénombrer et d'identifier les microorganismes contenus dans le liquide à l'aide d'outils de biologie moléculaire.

La méthode d'impaction consiste à accélérer fortement le flux d'un gaz et à le diriger vers une cible enduite de gélose. Les particules et microorganismes ayant une quantité de mouvement suffisante quittent le flux d'air et sont projetés sur la surface de cette cible. Il existe deux variantes de cette méthode :

- "l'impaction par crible", selon laquelle le gaz passe à travers une plaque percée de trous, chaque trou induisant la formation d'un jet de gaz qui impacte la cible (appareil AIR TEST™ OMEGA) et
- "l'impaction par centrifugation" ou par "rotation du flux", selon laquelle les particules sont séparées du flux gazeux et projetées par centrifugation sur une bandelette de gélose (appareils RCS High Flow™ de Biotest ou BIAP™ d'ECOMESURE).

Dans le cas du contrôle microbiologique de l'air ambiant, la plupart des appareils fonctionnent selon la méthode par impaction. Cependant, ces appareils ne permettent pas de déterminer de façon complète la contamination de l'air.

Il existe aussi des appareils commercialement disponibles dits « bio-impacteurs » fonctionnant selon cette même méthode, pour contrôler la qualité des gaz comprimés et conçus pour travailler à la pression du réseau sur lequel il est connecté, avec un débit de gaz constant de l'ordre de 28 litres / minute. Cependant, les résultats obtenus sont peu reproductibles car ils dépendent d'un grand nombre de facteurs, comme la taille des particules viables à analyser, le type et la sensibilité des microorganismes, le niveau de la contamination, les conditions environnantes, la précision et l'efficacité du prélèvement de l'opérateur, le type et la hauteur de gélose recouvrant la cible, la vitesse d'impaction des particules et le volume de gaz prélevé par sa capacité à sécher plus ou moins la gélose. C'est pourquoi les résultats varient pour un même gaz d'un appareil à l'autre, qu'ils soient identiques ou différents.

De plus, bien que les pompes et les systèmes d'aspiration de ces appareils soient étalonnés et contrôlés de manière à prélever un volume précis de gaz en un temps donné avec une vitesse constante, il n'existe pas de rapport d'étalonnage permettant de déterminer de façon précise le taux récupération des microorganismes vivants, réellement présents dans l'échantillon. Bien que certains fournisseurs de ces appareils aient défini les taux de récupération en fonction de la taille des particules, l'efficacité biologique, qui représente la capacité du collecteur à maintenir la viabilité des microorganismes collectés durant toute la procédure de prélèvement, n'a été que peu ou pas validée.

Enfin, il n'existe aujourd'hui aucune norme définissant un nombre maximum de microorganismes à ne pas dépasser par mètre cube d'air ambiant ou par mètre cube de gaz analysé, que ce soit dans l'industrie agroalimentaire, dans l'industrie pharmaceutique ou même dans le milieu médical. N'ayant pas de normes spécifiques à l'aérobiocontamination (à l'exception des salles blanches), il est nécessaire d'en établir une cartographie. Les seules normes existantes sont relatives à l'empoussièrement.

La demanderesse a donc cherché à développer un procédé de séparation de particules d'un gaz ou d'un mélange de gaz.

C'est pourquoi l'invention a pour objet un procédé de séparation par impaction, de particules viables et reviviscentes d'un gaz ou d'un mélange de gaz en contenant, s'écoulant à une vitesse $v_0$ non nulle, caractérisé en ce qu'il comprend :

- Une étape (a), d'accélération en un étage et selon un axe (x), du flux de gaz ou du mélange de gaz dans un volume confiné (V), pour atteindre une vitesse axiale $V_x$ supérieure à $v_0$, subsonique, sonique ou supersonique,
- Une étape (b), de décélération brutale dudit flux issu de l'étape (a) dans ledit volume, selon substantiellement le même axe (x), à pression atmosphérique,
- Une étape (c), de changement de direction de l'écoulement du gaz ou du mélange de gaz à la sortie du volume (V), qui devient radial en moyenne,

- Une étape (d), de piégeage des particules, séparées de l'écoulement lors de l'étape (c), sur une cible, et
- Une étape (e), d'échappement du flux de gaz ou du mélange de gaz du volume (V) de façon à ce qu'il n'y ait aucun contact entre l'atmosphère environnante et la cible mise en oeuvre à l'étape (d).

Dans le cadre de la présente invention, par gaz ou mélange de gaz en contenant, s'écoulant à une vitesse $v_0$ non nulle, on désigne un gaz ou un mélange de gaz à une pression totale supérieure à 1 atmosphère (environ $10^5$ Pa), généralement à une pression totale inférieure ou égale à 200 atmosphères, et plus particulièrement à une pression totale inférieure ou égale à 10 atmosphères.

Par brutale, on entend dans la présente demande de brevet, une décélération qui permet de réduire la vitesse d'un écoulement gazeux, à une vitesse axiale nulle sur la cible.

Par volume confiné (V), dans lequel se déroulent les étapes (a) et (b) et à l'extrémité duquel se déroule l'étape (c), on désigne dans le présent exposé, un volume fini délimité par une surface latérale finie, qui est de préférence une surface de révolution autour de l'axe (x).

Le débit de gaz dont on souhaite déterminer la qualité microbiologique, varie selon la provenance et /ou l'utilisation qui est faite dudit gaz. Il est souvent compris entre 50 litres par minute et 1000 litres par minute et plus particulièrement entre 100 litres par minute (mode jet subsonique) et 300 litres par minute (mode jet sonique pour la plupart des gaz).

Le procédé objet de la présente invention peut être mis en oeuvre avec n'importe quel gaz ou mélange de gaz.

Comme gaz ou mélange de gaz, il y a par exemple, l'air, l'oxygène ($O_2$), l'azote ($N_2$), l'argon (Ar), le dioxyde de carbone ($CO_2$), l'hélium (He), le protoxyde d'azote ($N_2O$), le monoxyde d'azote (NO), les mélanges de protoxyde d'azote et d'oxygène, de dioxyde de carbone et d'oxygène, d'azote et de monoxyde d'azote ou d'hélium et d'oxygène, et plus particulièrement les mélanges (50 % en volume (v/v) $N_2O$ + 50 % v/v $O_2$), (5 % v/v $CO_2$ + 95 % v/v $O_2$), (200 ppm à 800 ppm NO dans $N_2$), (78 % v/v He + 22 % v/v $O_2$), (65 % He +35 % $O_2$) et (80 % v/v He + 20 %v/v $O_2$), utilisés en médecine ou encore les mélanges d'azote et de dioxyde de carbone ($N_2$ + $CO_2$) utilisés dans l'industrie alimentaire.

Selon un premier aspect particulier, le volume confiné (V) consiste en une première fraction de volume (Va) dans laquelle est mise en oeuvre l'étape (a), délimitée par deux bases ($B_1$) et ($B_2$), de surfaces ($S_1$) et ($S_2$), avec ($S_1$) supérieure ou égale à ($S_2$) et une deuxième fraction de volume ($V_b$) contiguë à ($V_a$), dans laquelle est mise en oeuvre l'étape (b) délimitée par ($B_2$) et une base ($B_3$) de surface ($S_3$) supérieure ou égale à ($S_2$). Lorsque ($S_1$) et ($S_2$) sont égales, ($S_1$) est inférieure à la section du flux de gaz circulant en amont du volume (V).

Selon un aspect particulier du procédé tel que défini précédemment, l'étape (d) de piégeage des particules est mise en oeuvre sur une surface-cible capable de les fixer.

Par particules viables et reviviscentes, on désigne des microorganismes de tous ordres, capables de se multiplier dans des conditions de pression, d'humidité et de température appropriées.

De préférence la surface - cible est celle d'un milieu nutritif permettant le développement et la multiplication des microorganismes piégés. Il peut s'agir d'un milieu solide comme un milieu comprenant de la gélose. Selon le type de microorganismes dont on cherche à déterminer la présence, ledit milieu sera soit spécifique à la croissance d'une ou plusieurs espèces de microorganismes, soit non spécifique. Comme exemples de milieu solide nutritif mis en oeuvre pour piéger les particules, il y a :

- Le milieu Trypto-Caséine-Soja ou TCS™ (laboratoire AES référence : AEB 522 859), qui est un milieu sélectif des bactéries comprenant 15 g/l (gramme par litre) de pastone, 5 g/l de peptone papaïnique de soja, 5 g/l de chlorure de sodium et 15 g/l d'Agar. Ce milieu nécessite une incubation de 24 à 48 heures à 37˚C.
- Le milieu R2A™ (laboratoire AES, référence AEB 523 480), qui est un milieu non sélectif généralement utilisé pour le dénombrement des microorganismes dits "stressés", présents dans des eaux traitées pauvres en nutriments ; il comprend 1,0 g/l d'un mélange de peptones (protéose peptone), 0,5 g/l d'hydrolysât acide de caséine, 0,5 g/l de dextrose, 0,5 g/l d'amidon soluble, 0,3 g/l de phosphate dipotassique ($K_2HPO_4$), 0,024 g/l de sulfate de magnésium, 0,3 g/l de pyruvate de sodium et 15 g/l d'Agar.
- Le milieu R3A™ décrit dans : "A new medium for the enumeration and subculture of bacteria from potable water" (D.J. Reasoner and E. E. Geldreich, Applied and Environmental Microbiology, Vol. 49, N˚1, 1985, p.1-7), qui est un milieu non sélectif adapté comme le milieu R2A™ aux microorganismes dits "stressés" ; il comprend 1,0 g/l d'un mélange de peptones (protéose peptone), 1,0 g/l d'extrait de levure, 1,0 g/l d'hydrolysât acide de caséine, 1,0 g/l de dextrose, 1,0 g/l d'amidon soluble, 0,6 g/l de phosphate dipotassique ($K_2HPO_4$) 0,1 g/l de sulfate de magnésium, 0,10 g/l de pyruvate de sodium et 30 g/l d'Agar.
- Le milieu MOSSEL™ (laboratoire AES, référence AEB 521 740), qui est un milieu spécifique à la croissance de *Bacillus cereus* et des *Bacillus spp.* ; en général, il comprend 10 g/l de peptone de viande, 1 g/l d'extrait de viande, 10 g/l de chlorure de sodium, 10 g/l de mannitol, 0,025 g/l de rouge de phénol et 15 g/l d'Agar.
- Le milieu Schaedler™ au sang de mouton (5%) (Biomérieux, référence 43273), qui est particulièrement adapté à la culture des bactéries anaérobies et permet la croissance d'espèces exigeantes ; il comprend 5,7 g/l de peptone de caséine, 1 g/l de peptone de soja, 5 g/l de peptone de caséine et de viande, 5 g/l d'extrait de levure, 5,83 g/l de glucose, 1,7 g/l de chlorure de sodium, 3 g/l de phosphate bipotassique, 0,01 g/l de Tris(hydroxyméthyl) amino méthane, 0,01 g/l d'hémine, 0,4 g/l de cystéine, 0,0005 g/l de L-cystine, 13,5 g/l d'Agar et 50 ml/l de sang de mouton.

La dureté à l'impaction de ces milieux peut être modifiée en changeant la concentration en Agar ou Agar-agar.

L'invention a aussi pour objet une variante du procédé tel que défini précédemment, comprenant en outre une étape (f) de comptage des particules piégées lors de l'étape (d).

L'étape (f) consiste, de préférence, en une étape $(f_1)$ de cultures des particules viables et reviviscentes piégées à l'issue de l'étape (d), suivie d'une étape $(f_2)$ de comptage des unités formant colonies.

L'étape de culture consiste, par exemple, au maintien du milieu nutritif contenant les particules piégées, à une température permettant la multiplication des microorganismes pendant un temps déterminé par le milieu de culture utilisé (24 à 48 heures à 37˚C pour le milieu TCS™, 5 à 15 jours à 25˚C pour les milieux R2A™ ou R3A™, 24 heures à 37˚C pour le milieu Mossel™ ou 5 jours à 37˚C pour le milieu Schaedler™ au sang de mouton).

Le procédé tel que défini précédemment, permet de séparer efficacement des microorganismes ayant des dimensions comprises entre 0,05 $\mu$m et 25 $\mu$m et plus particulièrement entre 0,2 $\mu$m et 12 $\mu$m.

Comme exemples de microorganismes dont on a montré la présence dans un gaz comprimé ou liquéfié après isolement sur milieu nutritif, par la variante du procédé tel que décrit précédemment, il y a les moisissures et levures telles que, *Mucor indicus, Graphium spp, Penicillium spp.*; les bactéries Gram positives telles que *Staphylococcus epidermidis, Staphylococcus capitis, Staphylococcus aureus, Bacillus brevis*; les bactéries Gram négatives telles que *Pantoea spp*.

L'invention a aussi pour objet un procédé de détermination de la qualité microbiologique d'un gaz ou d'un mélange de gaz sous pression, par mise en oeuvre de la variante du procédé de séparation telle que décrite précédemment.

Le procédé et sa variante permettent la collecte sur milieu nutritif solide des germes présents dans un gaz, comprimé ou liquéfié, sous pression. Le gaz analysé peut provenir de bouteilles, de cadres, de réservoirs de stockage, primaires ou secondaires, d'un réseau d'alimentation en gaz, primaire ou secondaire, et plus particulièrement, soit d'un réseau d'alimentation en gaz médicaux tels qu'ils se trouvent dans les établissements de soins, comme les hôpitaux, les dispensaires ou les cliniques, soit d'un réseau de distribution de gaz tel qu'il y en a dans les usines de production de médicaments ou dans les usines de l'industrie agroalimentaire.

Le gaz n'a pas besoin d'être détendu à la pression atmosphérique pour être analysé par le procédé décrit précédemment.

Selon un autre aspect de la présente invention, celle-ci a pour objet un dispositif (D), apte à la mise en oeuvre du procédé et de sa variante tels que définis précédemment.

Le dispositif (D) comprend :

- Un élément $(D_1)$ dans lequel le flux de gaz subit successivement les étapes (a) et (b),
- Un élément $(D_2)$ constituant la cible sur laquelle les particules viables ou reviviscentes sont piégées selon l'étape (d) et,
- Un élément $(D_3)$, enveloppant en tout ou partie l'élément $(D_1)$, permettant de canaliser l'écoulement du gaz ou du mélange de gaz en sortie de l'élément $(D_1)$ vers un ou plusieurs orifices de sortie du dispositif (D), de façon à ce qu'il n'y ait aucun contact entre l'atmosphère environnante et la cible.

L'élément $(D_1)$ du dispositif (D) est un solide creux, comprenant un orifice d'entrée, un orifice de sortie, une surface latérale inférieure $S_L$, définissant un volume confiné (V) ayant des sections orthogonales, polygonales, elliptiques ou cylindriques, dans lequel se déroulent les étapes (a) et (b) du procédé tel que défini précédemment, à l'orifice de sortie duquel se déroule l'étape (c). La surface $S_L$ est plus particulièrement, soit une surface de révolution autour d'un axe (x) soit une surface latérale d'un polyèdre régulier d'axe de symétrique (x), soit un ensemble d'une ou plusieurs surfaces de révolution et / ou une ou plusieurs surfaces de polyèdres réguliers, de même axe de symétrie (x), définissant le volume (V). Les deux orifices sont de préférence co-axiaux par rapport à l'axe (x).

L'élément $(D_1)$ peut être en tout matériau, que ce soit un plastique un métal ou un alliage de métaux. Il est de préférence en un matériau pouvant être stérilisé par chaleur sèche (3 heures à 180˚C) ou par chaleur humide (20 minutes à 130˚C).

L'élément $(D_1)$ du dispositif (D) comprend plus particulièrement une surface latérale interne $S_L$ définissant une première fraction de volume $(V_a)$ de forme tronconique ou cylindrique, dans laquelle est mise en oeuvre l'étape (a), et une deuxième fraction de volume $(V_b)$ contiguë à $(V_a)$, de forme tronconique, dans laquelle est mise en oeuvre l'étape (b).

L'élément $(D_1)$ du dispositif (D) a tout particulièrement une forme définissant une première fraction de forme cylindrique de hauteur h et de diamètre w, dans laquelle est mise en oeuvre l'étape (a), et une deuxième fraction de forme tronconique de hauteur H de petite base de diamètre w et de grande base de diamètre W, dans laquelle est mise en oeuvre l'étape (b). L'orifice d'entrée est dans ce cas de section circulaire de diamètre w et l'orifice de sortie est de section circulaire et de diamètre W.

Le rapport h/w est en général compris entre 10/1 et 1/10. Il est plus particulièrement compris entre 10/2 et 2/10.

Le rapport W/w est en général compris entre 50/1 et 5/1. Il est plus particulièrement compris entre 25/1 et 10/1.

Le rapport H/w est en général compris entre 5/1 et 50/1. Il est plus particulièrement compris entre 10/1 et 40/1.

H est en général compris entre 10 mm et 200 mm, plus particulièrement entre 30 mm et 120 mm et tout particulièrement entre 40 mm et 100 mm.

Lorsque la pression totale du gaz devant entrer dans l'élément $(D_1)$ du dispositif (D) utilisé pour mettre en oeuvre le procédé tel que défini précédemment, est inférieure à 5 atmosphères, la valeur de w est, préférentiellement, comprise entre 2 et 5 mm environ et elle est plus particulièrement égale à environ 4 mm.

L'élément $(D_2)$ du dispositif (D) est de préférence de forme cylindrique et de diamètre $W_1$ supérieur ou égal à W. En général, $W_1$ est inférieur ou égal 90 mm. W est, en général, compris en 50 mm et 90 mm. Il s'agit de préférence d'une boite de Pétri. L'élément $(D_2)$ contient un milieu nutritif pour les microorganismes et plus particulièrement un milieu gélosique.

L'élément $(D_3)$ du dispositif (D) est un solide creux comprenant un orifice d'entrée, un orifice de sortie, une surface latérale inférieure $S_3$. La surface $S_3$ est plus particulièrement, soit une surface de révolution autour de l'axe (x), soit une surface latérale d'un polyèdre régulier d'axe de symétrique (x). L'élément $(D_3)$ présente plus particulièrement le même axe de symétrie que l'élément $(D_1)$. Cet élément D3 peut bien entendu être constitué d'une ou plusieurs parties.

L'élément $(D_3)$ définit avec l'élément $(D_1)$, un volume par lequel s'écoule le gaz délesté des particules piégées sur l'élément $(D_2)$ vers le ou les orifices de sortie du dispositif (D) à une vitesse suffisante pour que les microorganismes présents dans l'atmosphère ambiante n'atteignent pas la surface interne dudit élément $D_2$.

L'élément $(D_3)$ peut être en tout matériau, que ce soit un plastique un métal ou un alliage de métaux. Il est de préférence en un matériau pouvant être stérilisé par chaleur sèche (3 heures à 180˚C) ou par chaleur humide (20 minutes à 121 ˚C).

L'élément $(D_3)$ du dispositif (D) permet aussi de maintenir l'élément $D_2$ à une distance d de la grande base de $(D_1)$, suffisante pour permettre l'entier écoulement du gaz ou du mélange de gaz à la sortie de l'élément $(D_1)$, de façon radiale en moyenne à l'axe (x).

Le rapport H/d est, en général, compris entre 2/1 et 20/1. Il est plus particulièrement compris entre 3/1 et 15/1.

Le système d'ouverture de l'élément $(D_3)$ permet de préférence la libération des éléments $(D_2)$ et $(D_1)$, afin d'effectuer plus facilement la culture des particules viables et reviviscentes.

Le dispositif (D) tel que défini précédemment peut comprendre, en outre, un élément $(D_0)$ de connexion, tel que par exemple une prise crantée capable de s'adapter à une prise de gaz médical, un tube de petit diamètre capable de s'adapter à la sortie d'un manodétendeur et plus généralement tout raccord capable de s'adapter à tout dispositif de délivrance de gaz comprimé ou liquéfié.

Le dispositif (D) tel que défini précédemment peut comprendre en outre un manodétendeur placé entre l'élément de connexion $(D_0)$ et l'élément $(D_1)$.

Le dispositif (D) tel que défini précédemment peut être relié à l'alimentation en gaz à analyser, soit en étant connecté sur une prise murale, soit en étant connecté à la canalisation d'alimentation du gaz à analyser, de préférence en aval d'une vanne 1/4 de tour.

Le procédé et le dispositif, objets de la présente invention, sont mis en oeuvre pour déterminer la qualité microbiologique de gaz ou de mélanges de gaz contenus dans des bouteilles, qu'il s'agisse de bouteilles médicales ou de bouteilles industrielles, comme celles destinée à l'industrie de fabrications des composants électroniques, à l'industrie alimentaire ou à l'industrie pharmaceutique.

Le procédé et le dispositif, objets de la présente invention, sont aussi mis en oeuvre pour déterminer la qualité microbiologique de gaz ou de mélanges de gaz délivrés par des réseaux d'alimentation, tels que les réseaux d'alimentation hospitaliers permettant notamment la délivrance de gaz dans les chambres ou les blocs opératoires, les réseaux d'alimentation des chaînes fabrication d'aliments surgelés, les réseaux d'alimentation en gaz de très haute pureté pour la fabrication de composants électroniques ou les réseaux d'alimentation en gaz nécessaires à la fabrication et/ou au conditionnement des produits et formulations pharmaceutiques.

Le procédé et le dispositif, objets de la présente invention, sont aussi mis en oeuvre pour déterminer la qualité microbiologique de gaz ou de mélanges de gaz en sortie d'une unité de production du gaz ou du mélange de gaz, telle que par exemple, un compresseur, une colonne de distillation cryogénique, une colonne de séparation des gaz par adsorption, qu'il s'agisse d'une colonne PSA (adsorption à pression modulée ; en langue anglaise : Pressure Swing Adsorption), d'une colonne VSA (adsorption à volume modulé ; en langue anglaise : Volume Swing Adsorption) ou d'une colonne TSA (adsorption à pression modulée ; en langue anglaise : Temperature Swing Adsorption) ou d'une unité de séparation des gaz par perméation à travers des membranes polymères telles que par exemple une unité FLOXAL™.

Le procédé et le dispositif, objets de la présente invention, sont aussi mis en oeuvre pour déterminer la qualité microbiologique de l'air ambiant dans des locaux, et plus particulièrement dans les salles blanches des sites de fabrication de médicaments ou des sites de fabrications de composants électroniques ou encore dans les sites de conservation de documents.

Selon un autre aspect de la présente invention, celle-ci a pour objet un procédé de détermination de l'aptitude d'un dispositif capable de piéger des particules viables et reviviscentes, à déterminer la qualité microbiologique d'un gaz ou d'un mélange de gaz sous pression par rapport à un dispositif de référence tel que défini précédemment, comprenant l'injection d'une quantité déterminée d'un ou plusieurs microorganismes connus dans le flux en amont du dispositif à qualifier et la quantification des microorganismes piégés par ce dernier dispositif.

Selon un aspect particulier du procédé tel que défini ci-dessus, celui-ci est mis en oeuvre au moyen d'un banc d'étalonnage comprenant :

(1) un nébuliseur fonctionnant selon le principe du venturi, comprenant :

(i) une chambre cylindrique d'axe de symétrie (y), à laquelle sont connectés une ligne d'alimentation en gaz nébuliseur et une ligne d'alimentation en solution contenant la quantité prédéterminée de microorganismes dans un gaz nébuliseur ;
(ii) une tête de pulvérisation connectée à ladite chambre, de forme tronconique d'axe de symétrie (y), comportant en sa petite base, un orifice de pulvérisation et
(iii) un tube capillaire cylindrique (y), de diamètre inférieur au diamètre dudit orifice de pulvérisation, dont l'une des extrémités est insérée dans ledit orifice de façon coaxiale à la tête de pulvérisation,

(2) un carter enveloppant complètement ledit nébuliseur, auquel sont connectés une ligne d'alimentation en gaz vecteur et une ligne de distribution du flux de gaz issu de l'ensemble nébuliseur-carter, contenant les microorganismes vers le dispositif dont on souhaite déterminer son aptitude à les piéger, dans lequel le nébuliseur s'adapte de façon coaxiale à ladite ligne de distribution.

Selon un aspect particulier du nébuliseur tel que décrit ci-dessus, le nébuliseur est indémontable.

Selon un autre aspect particulier et préféré du nébuliseur tel que décrit ci-dessus, le nébuliseur est démontable en ce qu'au moins la tête de pulvérisation, la chambre cylindrique et le tube capillaire peuvent être désolidarisés les uns des autres.

Selon un dernier aspect, l'invention a pour objet un nébuliseur ainsi qu'un ensemble, nébuliseur-carter, apte à être mis en oeuvre dans le procédé décrit ci-dessus.

L'exposé expérimental suivant illustre l'invention sans toutefois la limiter.

Dispositif selon l'invention

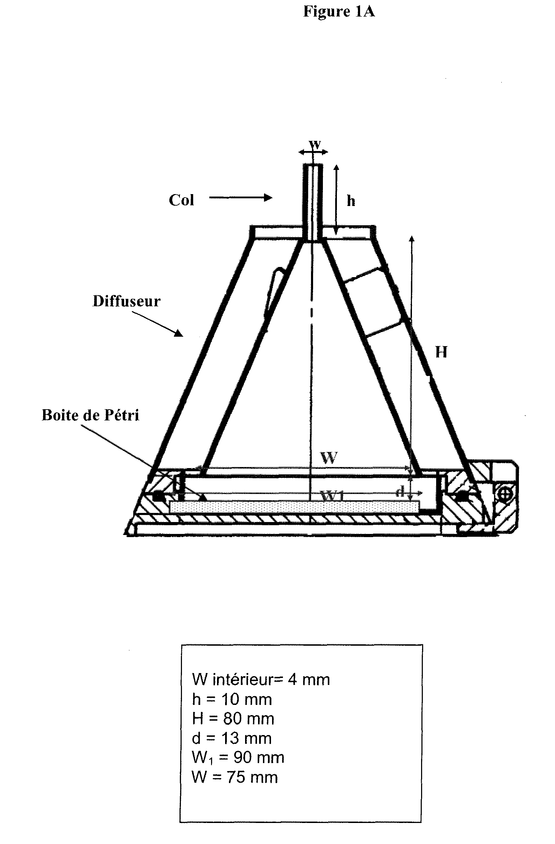

La Figure 1A représente un schéma d'un dispositif selon l'invention. Il est constitué d'un col (fraction cylindrique de l'élément ($D_1$)), d'un diffuseur (fraction tronconique de l'élément $D_1$) et d'une boite de Pétri (élément ($D_2$)). Les mesures indiquées sur cette figure sont les suivantes :

w représente le diamètre intérieur du col et est égal à 4 mm;
h représente la longueur du col et est égale à 10 mm ;
H représente la hauteur du diffuseur et est égale à 80 mm ;
W représente le diamètre de la grande base du diffuseur et est égal à 75 mm ;
$W_1$ représente le diamètre de la boite de Pétri et est égale à 90 mm ;
d représente la distance entre la grande base du diffuseur et la surface externe de la gélose de la boite de Pétri et est égale à 13 mm ;

Le dispositif fonctionne de façon à ce que la vitesse du jet continue d'augmenter, tant que sa pression n'a pas atteint la pression atmosphérique. La pression totale d'alimentation est comprise entre environ $2.10^5$ Pa et $10^6$ Pa.

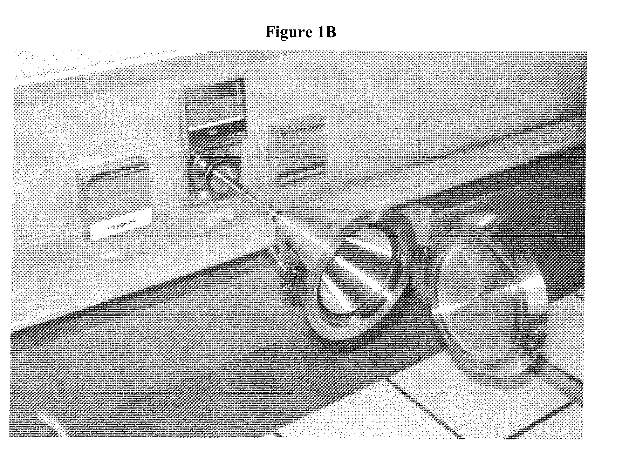

Un dispositif pour lequel H est égal 80 mm est présenté sur la photo de la Figure 1 B.

Dans le col, le fluide accélère jusqu'à la sortie du col. Ensuite, il y a des zones de pression/détente faible où l'écoulement est alternativement accéléré et ralenti.

Pour préserver l'intégrité de la gélose utilisée dans cette application particulière, on cherche à avoir une pression totale sur sa surface inférieure à 7500 Pa, ce qui, pour le dispositif de la Figure 1 B, implique une hauteur H = 80 mm.

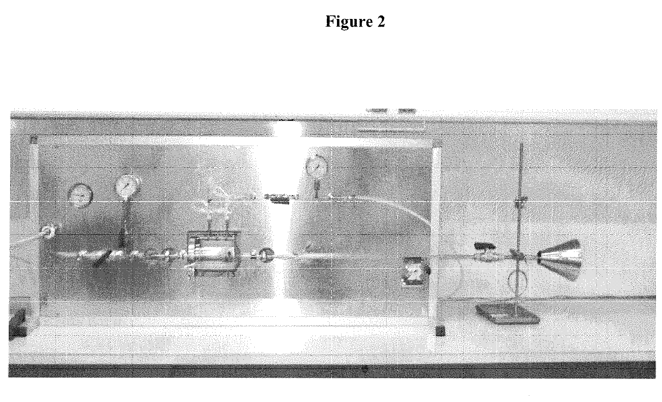

On utilise le banc d'étalonnage pour gaz comprimé ou liquéfié présenté sur la photo de la Figure 2, muni du dispositif selon l'invention, afin d'en qualifier l'efficacité biologique et de la comparer à celle de biocollecteurs existants.

Dans les conditions de fonctionnement, le gaz vecteur, dans le cas présent de l'air médical issu d'une bouteille commercialisée par les demanderesses et connectée à un manodétendeur, simple détente Air Liquide référencé : AHL 16-25, circule dans la ligne d'alimentation de l'ensemble carter - nébuliseur, à une pression P' comprise entre environ $10^5$ et $5.10^5$ Pa relatifs et le gaz nébuliseur, dans le cas présent de l'air médical issu d'une bouteille commercialisée par les demanderesses et connectée à un manodétendeur, simple détente Air Liquide référencé : HBS 300/8, circule dans la ligne d'alimentation de l'ensemble carter - nébuliseur, à une pression P supérieure à >P' comprise entre $4.10^5$ Pa et $6.10^5$ Pa relatifs.

La complexité d'un tel dispositif réside dans la nébulisation sous pression de microorganismes, les nébuliseurs de l'état de la technique ne fonctionnant que rarement sous pression.

Un premier essai mettant en oeuvre un nébuliseur TR50-1C1™, commercialisé par la société ANALAB, capable de nébuliser des microorganismes sous pression (entre $10^5$ Pa et $4.10^5$ Pa) sans les détruire, a été fait avec le banc d'étalonnage et s'est révélé insatisfaisant à cause, d'une part, de la fragilité du nébuliseur et, d'autre part, de pertes importantes lors de la nébulisation.

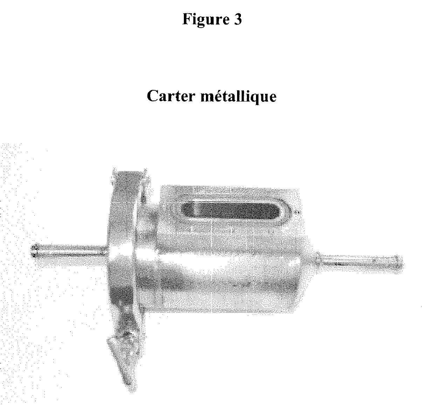

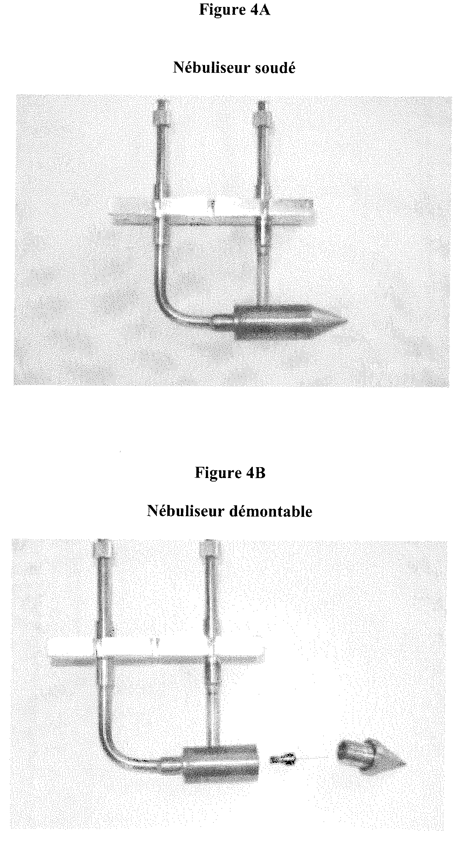

C'est pourquoi un nébuliseur métallique, fonctionnant sur le principe du Venturi, a été mis au point. Il est muni d'un capillaire de 0,2 mm de diamètre et il est inséré dans un carter métallique (Figure 3A). Deux modèles de nébuliseurs ont été élaborés, l'un entièrement soudé (Figure 4A) et le second démontable (Figure 4B), permettant de changer facilement le capillaire si celui-ci venait à s'obstruer.

Le nébuliseur comprend un tube permettant son alimentation en inoculum microbiologique et un tube d'alimentation en gaz nébuliseur à la pression P' supérieure à la pression P, pour obtenir des débits gazeux au col de 100 à 300 litres par minute (l/mn). Pour optimiser le rendement de nébulisation, deux vannes trois voies en plastique, reliées entre elles par un tuyau souple et situées en amont, sur les deux tubes d'alimentation du nébuliseur, permettent la circulation de gaz nébuliseur dans le tube d'injection de l'inoculum. On évite ainsi la stagnation de gouttelettes d'inoculum dans le nébuliseur.

Désinfection et stérilisation du dispositif

Le carter, la canalisation droite et le dispositif (D) composé des éléments $(D_1)$ et $(D_3)$ sont stérilisés par chaleur humide à l'autoclave durant 20 minutes à 120˚C.

Le nébuliseur est désinfecté à l'alcool 70˚ avant son montage sur le carter.

Le système d'injection des microorganismes dans le nébuliseur (les 2 vannes 3 voies en plastique, les canalisations les reliant et la seringue), est un dispositif stérile à usage unique.

Méthode d'injection d'un inoculum microbiologique de concentration connue

Elle comprend les étapes suivantes :

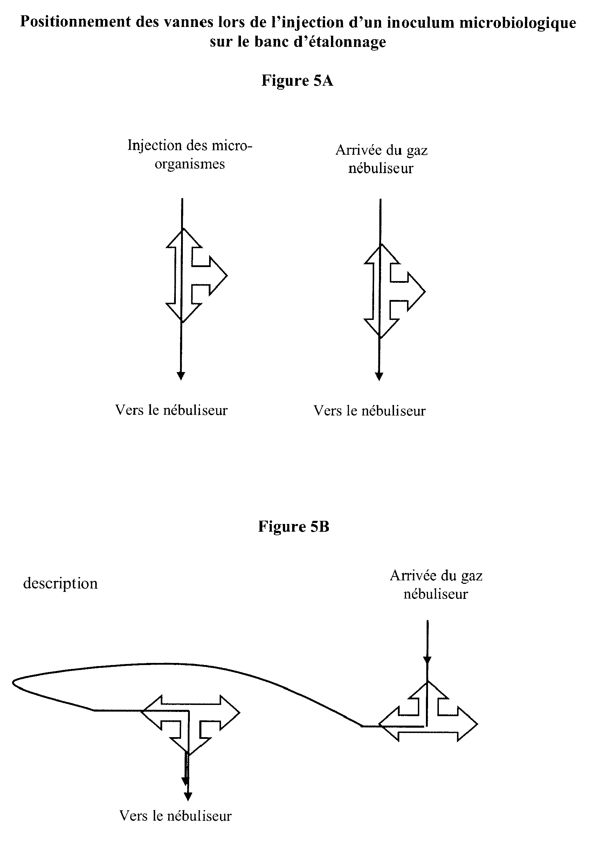

- régler la pression du gaz vecteur au manodétendeur à $3,5.10^5$ Pa relatifs et celle du gaz nébuliseur à $4.10^5$ Pa relatifs pour un débit gazeux au col de 200 l/mn ;
- brancher le dispositif à tester muni d'une boite de Pétri sur le banc d'étalonnage ;
- fermer la vanne ¼ de tour ;
- vérifier l'étanchéité du dispositif ;
- ouvrir la vanne ¼ de tour ;
- ouvrir la vanne d'arrivée du gaz vecteur, puis celle du gaz nébuliseur ;
- injecter lentement 0,5 ml d'inoculum microbiologique de concentration connue comprise entre 50 UFC/ml à 900 UFC/ml en actionnant plusieurs fois sur le piston de la seringue pendant 15 secondes (Figure 5A) ;
- modifier l'orientation des vannes (Figure 5B) pendant 15 secondes supplémentaires ;
- fermer la vanne d'arrivée du gaz vecteur, puis celle du gaz nébuliseur.

Un volume connu d'une suspension de microorganismes en quantité déterminée est nébulisé pendant qu'un volume de gaz défini est injecté dans le banc d'étalonnage. En sortie du banc, on dispose donc d'un volume connu de gaz contenant un nombre parfaitement déterminé de microorganismes en suspension dans ce volume. On récupère à la sortie de la canalisation, les microorganismes par le dispositif selon l'invention. Connaissant la quantité de microorganismes injectée et la quantité recueillie par le collecteur, on peut en déduire le taux T de récupération du dispositif selon la formule suivante :

$$T = (\text{nombre d'UFC dénombrées sur milieu gélosé} / \text{nombre de microorganismes injectés}) \times 100$$

Nous avons fait varier différents paramètres de ce banc d'étalonnage ou de sa méthodologie de mise en oeuvre afin d'optimiser ses performances et conserver un taux de récupération de spores de *Bacillus subtilis* d'environ 40% avec le dispositif D (H=80 mm et w=4 mm).

Un tel taux de récupération est atteint pour :

(i) une longueur de canalisation de 76 cm et de diamètre 8/10 mm ou 16/18 mm en inox 18/10 ou en laiton,
(ii) la connexion du dispositif (D) sur une vanne ¼ de tour ou sur une prise murale (type standard prise hospitalière),
(iii) la dilution de l'inoculum dans un bouillon Trypto-Caséine-Soja, dans de l'eau peptonée ou non peptonée.

Nous avons aussi étudié l'influence des valeurs H et de w du dispositif D sur le taux T de récupération des microorganismes. Les résultats sont consignés dans les tableaux suivants :

Tableau 1 : Influence de H sur le taux T de récupération par le dispositif (D) des spores de *Bacillus subtilis* injectés avec w = 4 mm.

| H (mm) | T (%) |
|--------|-------|
| 50 | 20 |
| 80 | 40 |
| 170 | 20 |

Tableau 2 : Influence de w sur le taux T de récupération par le dispositif (D) des spores de *Bacillus subtilis* injectés avec H = 80 mm.

| w (mm) | T (%) |
|--------|-------|
| 4 | 40 |
| 2 | 12 |

C'est donc un cône de 80 mm de longueur (H) avec un orifice de 4 mm de diamètre (w) qui donne le meilleur taux de récupération.

Une série de 35 injections consécutives est effectuée avec un inoculum microbiologique de 400 UFC/ml. Le taux de récupération est de 40%. La plupart des points (88%) se situent entre + 1 écart type et - 1 écart type.

Ces résultats mettent en lumière les avantages du dispositif selon l'invention :

(i) il annule l'entraînement de l'air ambiant qui pollue le gaz,
(ii) il permet d'obtenir une décélération très brutale du flux de gaz et
(iii) il limite la pression totale sur la gélose à une valeur de l'ordre de 7500 Pa.

On obtient des taux de récupération centrés autour de 40% et reproductibles ; ceci constitue un résultat nettement supérieur aux résultats décrits dans l'état de la technique, qui dépassent rarement 5% et de façon non reproductible.

Nous avons aussi étudié l'influence du débit de gaz à analyser sur le taux de récupération de spores de *Bacillus subtilis* avec un dispositif (D) de diamètre d'entrée w = 4 mm, et de longueur H = 80 mm, connecté à un tube d'alimentation en gaz de 6 / 1 mm. Les résultats sont consignés dans le tableau suivant :

Tableau 3 : Influence du débit de gaz appliqué, sur le taux T de récupération par le dispositif (D) des spores de *Bacillus subtilis* injectés (H = 80 mm ; w = 4 mm ; temps de prélèvement 30 s).

| Débit de gaz (l/mn) | T (%) |
|---------------------|-------|
| 75 | 24 |

(suite)

| Débit de gaz (l/mn) | T (%) |
|---|---|
| 100 | 39 |
| 200 | 40 |
| 300 | 40 |

Le dispositif D peut être utilisé indépendamment à un débit de gaz inférieur à 300 l/min (vitesse de gaz subsonique) ou à un débit de gaz supérieur à 300 l/min (vitesse supersonique), tout en fournissant un taux de récupération constant et reproductible d'environ 40% pour des spores de *Bacillus subtilis.* La seule limite est la destruction éventuelle de la gélose à une vitesse supersonique.

Le dispositif (D) tel que défini précédemment, peut être relié à l'alimentation en gaz à analyser, <u>soit</u> en étant connecté sur une prise murale, soit en étant connecté à la canalisation d'alimentation du gaz à analyser, de préférence en aval d'une vanne 1/4 de tour.

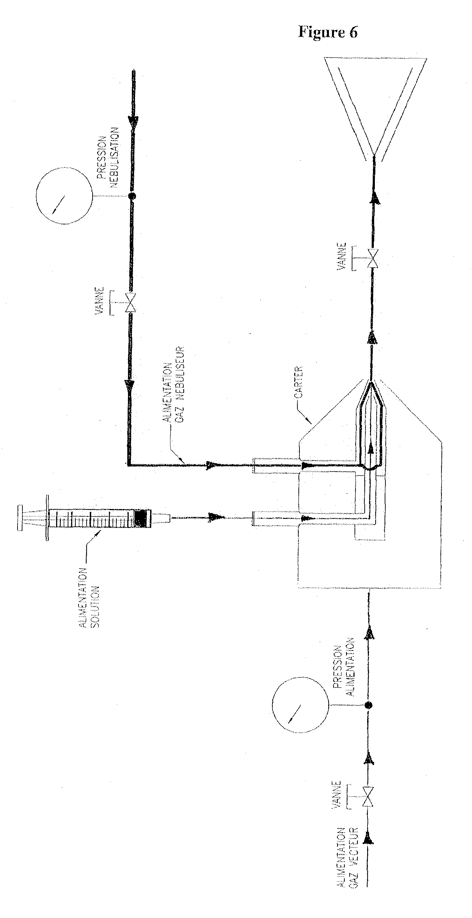

La figure 6 illustre de façon schématique une structure de banc et de nébuliseur conformes à l'invention et permet en conséquence de mieux comprendre leur fonctionnement.

**Revendications**

1. **Procédé de détermination de l'aptitude d'un dispositif capable de piéger des particules viables et reviviscentes, à déterminer la qualité microbiologique d'un gaz ou d'un mélange de gaz sous pression,** comprenant l'injection d'une quantité déterminée d'un ou plusieurs microorganismes connus dans le flux en amont du dispositif à qualifier et la quantification des microorganismes piégés par ce dernier dispositif.

2. Procédé tel que défini à la revendication 1 mis en oeuvre au moyen d'un banc d'étalonnage comprenant :

   (1) un nébuliseur fonctionnant selon le principe du venturi, comprenant :

   (i) une chambre cylindrique d'axe de symétrie (y), à laquelle sont connectés une ligne d'alimentation en gaz nébuliseur et une ligne d'alimentation en solution contenant la quantité prédéterminée de microorganismes dans un gaz nébuliseur ;
   (ii) une tête de pulvérisation connectée à ladite chambre, de forme tronconique d'axe de symétrie (y), comportant en sa petite base, un orifice de pulvérisation et
   (iii) un tube cylindrique (y), de diamètre inférieur au diamètre dudit orifice de pulvérisation, dont l'une des extrémités est insérée dans ledit orifice, de façon coaxiale à la tête de pulvérisation ;

   (2) un carter enveloppant complètement ledit nébuliseur, auquel sont connectés une ligne d'alimentation en gaz vecteur et une ligne de distribution du flux de gaz issu de l'ensemble nébuliseur-carter, contenant les microorganismes vers le dispositif dont on souhaite déterminer son aptitude à les piéger, dans lequel le nébuliseur s'adapte de façon coaxiale à ladite ligne de distribution.

3. **Nébuliseur** apte à être mis en oeuvre dans le procédé tel que défini à la revendication 2 ; **caractérisé en ce qu'**il comporte

   (i) une chambre cylindrique d'axe de symétrie (y), à laquelle sont connectés, une ligne d'alimentation en gaz nébuliseur et une ligne d'alimentation en solution contenant la quantité prédéterminée de microorganismes dans un gaz nébuliseur ;
   (ii) une tête de pulvérisation connectée à ladite chambre, de forme tronconique d'axe de symétrie (y), comportant en sa petite base, un orifice de pulvérisation et
   (iii) un tube capillaire cylindrique (y), de diamètre inférieur au diamètre dudit orifice de pulvérisation, dont l'une des extrémités est insérée dans ledit orifice de façon coaxiale à la tête de pulvérisation.

## Figure 1A

W intérieur= 4 mm
h = 10 mm
H = 80 mm
d = 13 mm
$W_1$ = 90 mm
W = 75 mm

**Figure 1B**

Figure 2

**Figure 3**

**Carter métallique**

**Figure 4A**

**Nébuliseur soudé**

**Figure 4B**

**Nébuliseur démontable**

**Positionnement des vannes lors de l'injection d'un inoculum microbiologique
sur le banc d'étalonnage**

**Figure 5A**

Injection des microorganismes

Arrivée du gaz
nébuliseur

Vers le nébuliseur

Vers le nébuliseur

**Figure 5B**

description

Arrivée du gaz
nébuliseur

Vers le nébuliseur

**Figure 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D.J. REASONER ; E. E. GELDREICH.** A new medium for the enumeration and subculture of bacteria from potable water. *Applied and Environmental Microbiology,* 1985, vol. 49 (1), 1-7